## Europäisches Patentamt

## European Patent Office

## Office européen des brevets

(19)

(11) Veröffentlichungsnummer: **0 249 601**
**B1**

(12) **EUROPÄISCHE PATENTSCHRIFT**

(45) Veröffentlichungstag der Patentschrifft:
21.03.90

(51) Int. Cl. ⁵: **F 16 B 7/04,** E 04 B 1/344,
E 04 B 1/58

(21) Anmeldenummer: 86906748.8

(22) Anmeldetag: 25.11.86

(86) Internationale Anmeldenummer:
PCT/CH 86/00163

(87) Internationale Veröffentlichungsnummer:
WO 87/03346 (04.06.87 Gazette 87/12)

(54) GERIPPE BESTEHEND AUS STABFÖRMIGEN ELEMENTEN.

(30) Priorität: 02.12.85 CH 5152/85

(43) Veröffentlichungstag der Anmeldung:
23.12.87 Patentblatt 87/52

(45) Bekanntmachung des Hinweises auf die Patenterteilung:
21.03.90 Patentblatt 90/12

(84) Bennante Vertragsstaaten:
AT BE CH DE FR GB IT LI LU NL SE

(56) Entgegenhaltungen:
EP-A-0 106 016
WO-A-84/01094
DE-A-2 015 312
DE-A-2 024 508
FR-A-2 251 228
FR-A-2 563 293
US-A-2 762 639
US-A-2 941 294
US-A-4 290 244

(73) Patentinhaber: ENTWURF PARTNER RUEDI ZWISSLER
Brauerstrasse 113
CH-9016 St. Gallen (CH)

(72) Erfinder: ZWISSLER, Ruedi
Brauerstrasse 113
CH-9016 St. Gallen (CH)

(74) Vertreter: Wenger, René
Hepp & Partner AG Marktgasse 18
CH-9500 Wil (CH)

LIBERGRAF, STOCKHOLM 1990

**Beschreibung**

Die Erfindung bezieht sich auf ein Gerippe bestehend aus stabförmigen Elementen gemäß dem Oberbegriff von Anspruch 1. Derartige Gerippe ermöglichen den raschen Aufbau einer Raumstruktur für die verschiedensten Zwecke. Sie werden heute beispielsweise in zunehmendem Masse im Ausstellungsbau für den Aufbau von Schauwänden oder für die Konstruktion ganzer Standaufbauten eingesetzt. Denkbar ist aber auch die Konstruktion von Möbeln oder von behelfsmäßigen Notunterkünften sowie von Kuppeln und dergleichen mehr.

Gattunsmässig vergleichbare Gerippe sind beispielsweise durch die US-A-4 290 244 oder die WO-A-84 01 094 bekannt geworden. Bei den dort dargestellten und beschriebenen Konstruktionen sind die Verbindungselemente fest in die Enden der stabförmigen Elemente eingeprellt, wobei jeweils mehrere Verbindungselemente fest an einem Knotenpunkt angelenkt sind. Ein Rohrverbindungssystem mit austauschbaren Verbindungselementen ist durch die DE-A-2 024 508, die als nächstliegender Stand der Technik anzusehen ist, bekannt geworden. Die Rohrstücke weisen an ihren Enden wenigstens zwei Ausnehmungen auf und die Verbindungselemente haben mit Nasen versehene Spreizarme, welche in die Rohrstücke einsteckbar sind, wobei die Nasen in die Ausnehmungen einrasten. Zur Querverbindung mit einem anderen Rohr dient ein schellenartiges Teil, das an den Spreizarmen angeordnet ist.

Dieses Verbindungssystem erlaubt zwar die Entfernung und den Austausch der Verbindungselemente, eignet sich aber nicht für die Bildung komplizierter Knotenpunkte an einem Gerippe.

Es ist daher eine Aufgabe der Erfindung, ein Gerippe der eingangs genannten Art zu schaffen, bei dem die Verbindungselemente auf einfache Weise austauschbar sind, wobei mit diesen auch komplizierte Knotenpunkte rasch angeschlossen werden können. Außerdem sollen vielseitige Strukturen mit möglichst wenigen Einzelbauteilen realisiert werden können, wobei der Benützer die Einzelbauteile im Baukastenprinzip selber beliebig kombinieren kann. Diese Aufgabe wird erfindungsgemäß mit einem Gerippe gelöst, das die Merkmale in Anspruch 1 aufweist.

Der in die Öffnung im Rohrmantel einrastbare Nocken am Schaft des Verbindungselementes erlaubt eine Entfernung des Verbindungselementes in jedem beliebigen Zustand. So können an einer bestehenden Konstruktion beispielsweise einzelne Rohre entfernt werden und gegen andere Rohre mit anderer Längenabmessung ausgetauscht werden. Wenn die stabförmigen Elemente Rohre sind, können diese sogar auf jedes beliebige Mass zugeschnitten werden, wobei lediglich noch die Öffnung im Rohrmantel an der richtigen Stelle zu bohren ist. Die Struktur läßt sich außerdem vollständig in ihre Einzelteile zerlegen, so daß beispielsweise die gleichen stabförmigen Elemente zum Bau unterschiedlicher Strukturen mit verschiedenen Verbindungselementen versehen werden können. Daraus ergibt sich ein Baukastensystem, das einerseits eine bestimmte Anzahl Typen stabförmiger Elemente und anderseits eine bestimmte Anzahl Typen Verbindungselemente aufweist. Der federnde Nocken wird zu einem separaten Bauteil, womit die Herstellung des Verbindungselements vereinfacht werden kann. Außerdem kann derart die gewünschte Federspannung je nach Ausbildung des Federelements beliebig gewählt werden und beschädigte Nocken lassen sich austauschen, ohne daß dabei das ganze Verbindungselement unbrauchbar wird. Es ist auch denkbar, das Federelement aus einem anderen Werkstoff als das übrige Verbindungselement zu fertigen.

Die Funktion der Greifvorrichtung ist besonders effizient, weil die Verbindungselemente in der Ebene der Rohrachse geteilt ausgebildet sind und die Greifvorrichtung aus zwei Halbschalen besteht, die bei eingeschobenem Schaft geschlossen sind. Die Halbschalen können dabei sowohl sphärisch zum Ergreifen einer Kugel als auch hohlzylindrisch oder mit einem polygonen Querschnitt zum Ergreifen einer Achse ausgebildet sein. Ersichtlicherweise können die beiden Halbschalen um eine bestehende Achse oder Kugel geschlossen werden, so daß eine gelenkige oder drehfeste Verbindung entsteht, die jedoch jederzeit gelöst werden kann.

Die Verbindungselemente können besonders rationell gefertigt und gehandhabt werden, wenn die beiden Hälften separate Teile sind, die an einem Ende mittels einer Einrastvorrichtung zusammensteckbar und derart scharnierartig miteinander verbunden sind. Bei richtiger Konfiguration können die beiden Hälften absolut identische Teile sein, die zu einem symmetrischen Körper zusammensteckbar sind. Die scharnierartige Verbindung an der Einrastvorrichtung verhindert, daß die beiden Hälften bei der Demontage auseinanderfallen. Außerdem wird bei richtiger Begrenzung des Öffnungswinkels ein Herausfallen des Federelements verhindert.

Vielseitige Kombinationsmöglichkeiten für die stabförmigen Elemente ergeben sich, wenn die Greifvorrichtung an ein Kernteil anschließbar ist, das an seiner Außenseite mit Kupplungsmitteln versehen ist, welche formschlüssig in die Halbschalen passen. Auf diese Weise können mehrere Stäbe zu einem Knoten verbunden werden, wobei jeder einzelne Stab durch Öffnen der Greifvorrichtung jederzeit entfernt werden kann.

Wenn das Kernteil etwa viereckig ausgebildet ist und auf jeder Seite je zwei Achsabschnitte aufweist, von denen jeder eine Greifvorrichtung aufnehmen kann, lassen sich auf einer Seite zwei Stäbe anschließen. Dies erleichtert den Bau raumförmiger Gebilde sowie die Konstruktion faltbarer Gebilde mit sich kreuzenden Stäben.

Vorzugsweise sind die sich scherenartig kreuzenden Elemente an ihren Kreuzungsstellen lösbar miteinander verbunden. Auf diese Weise läßt sich auch eine einzelne Schere vollständig zerlegen, so daß auch Scheren mit unterschiedlichen Stablängen zusammengebaut werden können.

Weitere Vorteile können erzielt werden, wenn das Gerippe ein Grundelement aus zwei sich kreuzenden, planen und rechteckigen Rahmen aufweist, wobei jeweils parallele Rahmenseiten die sich scherenartig kreuzenden Elemente bilden. Eine beliebige Anzahl Anschlußelemente kann sich in allen drei Raumachsen auf die gleiche Weise an ein derartiges Grundelement anschließen, so daß ein Gerippe aus mehreren sich kreuzenden Rahmenebenen entsteht. Dieser Grundraster hat den Vorteil, daß er keine störenden Diagonalverbindungen zwischen sich kreuzenden Stabpaaren benötigt. Sowohl die einzelnen Rahmenebenen als auch die Ebenen zwischen den Seiten zweier benachbarter Rahmen bleiben dadurch für gestalterische Zwecke frei. In diesen Ebenen können Schautafeln, Tablare, Transparente usw. eingelegt bzw. eingespannt werden.

Das Gerippe erhält eine besondere Stabilität und Verwindungssteifigkeit, wenn die stabförmigen Elemente Rohre sind, deren Mantel mit in Achsrichtung verlaufenden Rillen ausgebildet ist. Die Rillen verbessern außerdem das äußere Erscheinungsbild und machen die Rohre griffiger. Wenn der Rohrmantel im Querschnitt wellenförmig ausgebildet ist, wird damit die Dehnbarkeit der Rohrenden in Radialrichtung verbessert. Außerdem können die Schäfte der Verbindungselemente besser eingeführt werden, weil die Oberfläche des Innenmantels durch die Wellenform reduziert wird und damit eine geringere Reibung überwunden werden muß. Die Rillen auf der Außenseite haben auch noch den Vorteil, daß in Umfangsrichtung eine Rasterung gebildet wird, so daß z. B. Klemmen und dergleichen in einem bestimmten Winkel befestigt werden können.

Weitere Vorteile und Einzelmerkmale der Erfindung ergeben sich aus der nachstehenden Beschreibung und aus den Zeichnungen. Die Zeichnungen zeigen verschiedene Ausführungsbeispiele, die nachstehend genauer beschrieben werden.

Es zeigen:

Figur 1   ein Verbindungselement mit aufgeklappter Greifvorrichtung vor dem Einschieben in ein Rohrende,

Figur 2   das Verbindungselement gemäß Figur 1 im geschlossenen und in das Rohrende eingeschobenen Zustand,

Figur 3   eine Ansicht von unten auf die obere Hälfte des Verbindungselementes gemäß Figur 1,

Figur 4   eine Seitenansicht auf das hälftige Verbindungselement gemäß Figur 3,

Figur 5   eine Ansicht von oben auf das hälftige Verbindungselement gemäß Figur 3,

Figur 6   ein abgewandeltes Ausführungsbeispiel eines Verbindungselementes im geöffneten und im geschlossenen Zustand,

Figur 7   ein Verbindungselement zur Aufnahme einer Schraube,

Figur 8   einen Querschnitt durch eine Verbindung von drei Rohrenden,

Figuren 9 u. 10   ein abgewandeltes Ausführungsbeispiel eines Verbindungselements ohne Längsteilung,

Figur 11   eine Draufsicht auf ein Kernteil,

Figur 12   einen Querschnitt durch eine Kernteil-Hälfte durch die Ebene I - I gemäß Figur 11,

Figur 13   einen Querschnitt durch das Kernteil in der Ebene II - II gemäß Figur 11,

Figur 14   ein kleines Kernteil,

Figur 15   einen Querschnitt durch das Kernteil gemäß Figur 14,

Figur 16   eine Seitenansicht auf ein Rohrende mit Wellenmantel in stark vergrößertem Maßstab,

Figur 17   ein Gerippe in schematischer Darstellung bestehend aus sich kreuzenden Rahmen,

Figur 18   ein Grundelement mit verschiedenen Anschlußmöglichkeiten und Verbindungselementen in perspektivischer Darstellung,

Figur 19   ein Grundelement mit an den Rahmenschenkeln befestigten Platten,

Figur 20   ein Element aus vier miteinander verbundenen Stabpaaren,

Figur 21   vier miteinander verbundene Stabpaare mit pyramidenartiger Stabstruktur,

Figur 22   eine Detaildarstellung einer Pyramidenspitze,

Figur 23   eine Detaildarstellung eines Anschlusses der Pyramidenstäbe,

Figur 24   eine Draufsicht auf eine Deckenkonstruktion mit viereckigem Grundraster,

Figur 25   eine Seitenansicht der Konstruktion gemäß Figur 24.

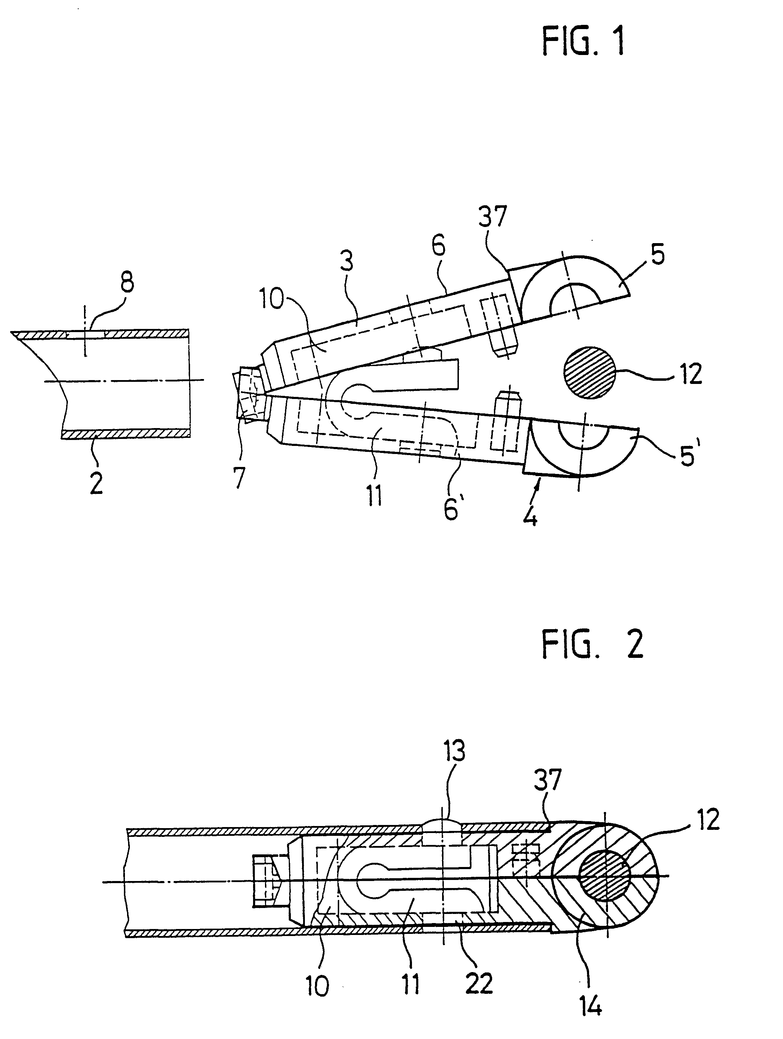

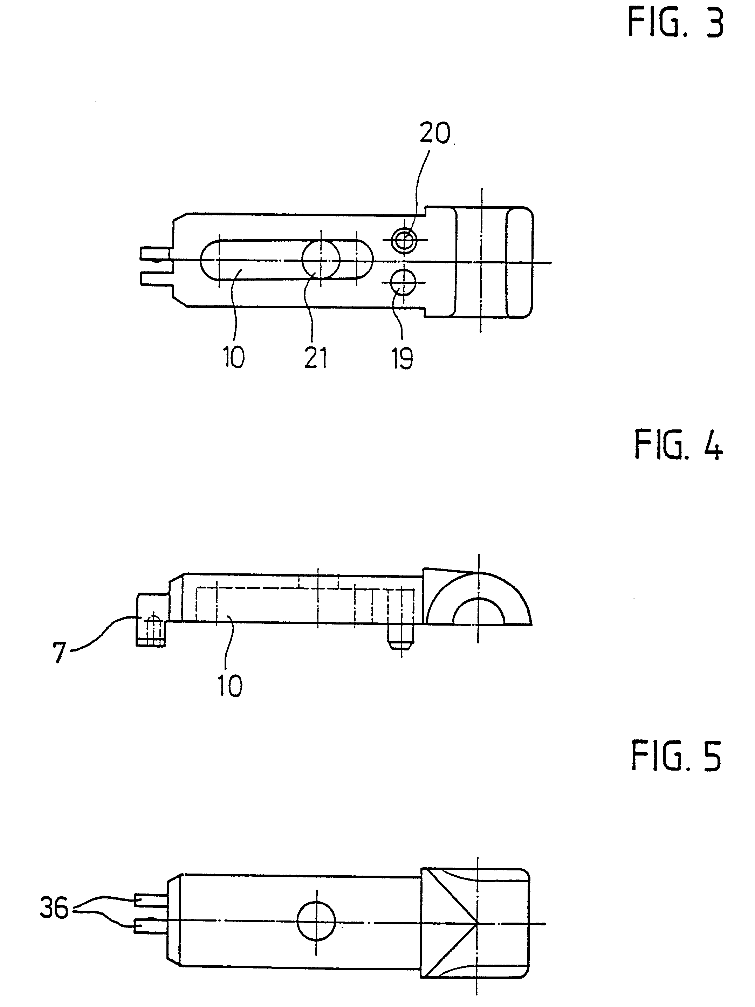

Wie in den Figuren 1 bis 5 dargestellt, besteht ein typisches Verbindungselement 4 aus den beiden Hälften 6 und 6', welche vorzugsweise absolut identisch ausgebildet sind. Die Verbindungselemente werden vorzugsweise aus Kunststoffmaterial im Spritzgußverfahren hergestellt. Die beiden Hälften 6 und 6' werden an einer Einrastvorrichtung 7 zusammengesteckt, so daß sie scharnierartig geöffnet und geschlossen werden können. Wie insbesondere aus den Figuren 3 bis 5 ersichtlich ist, besteht die Einrastvorrichtung aus zwei Wangen 36, welche asymmetrisch zur Mittelachse angeordnet sind und von denen wenigstens eine nach unten verlängert ist, wie aus Figur 4 ersichtlich ist. Auf der Innenseite der Wangen ist je ein Nocken bzw. eine Vertiefung vorgesehen, so daß zwei ineinander geschobene Wangenpaare ineinander einrasten. Die Wangen sind dabei derart ausgebildet, daß sich die beiden Hälften 6 und 6' nur bis zu einem bestimmten Winkel öffnen können, was die Handhabung vereinfacht und zudem verhindert, daß das Federelement herausfallen kann.

Für eine einwandfreie Positionierung der beiden Hälften ist an jeder Hälfte je ein Positionierbolzen 19 und eine Positionierbohrung 30 angeordnet. Bei den einander zugewandten Hälften 6 und 6' dringt jeweils der Positionierbolzen 19 in die gegenüberliegende Positionierbohrung 20. Im Schaft 3 des Verbindungselements ist eine Ausnehmung 10 vorgesehen, die an einer Stelle in eine Öffnung 21 übergeht. Die Ausnehmung 10 dient zur Aufnahme des Federelements 11, das im vorliegenden Ausführungsbeispiel als U-förmiger Bügel ausgebildet ist. Jedes Federelement trägt einen Nocken 13, der im geschlossenen Zustand aus der Öffnung 21 ragt. Am unteren Schenkel des U-förmigen Bügels ist ein Positioniernocken 22 angeordnet, der jedoch nur teilweise in die Öffnung 21 eindringt und lediglich zur Positionierung des Federelements 11 dient.

Jedes Verbindungselement ist mit einer Greifvorrichtung 14 versehen, die im vorliegenden Fall aus den beiden Halbschalen 5 und 5' besteht. Diese beiden Halbschalen sind so ausgebildet, daß sie eine Achse 12 formschlüssig ergreifen können. Eine umlaufende Schulter 37 begrenzt den Schaft 3, wobei die Schulter vorzugsweise eine Höhe aufweist, die etwa der Wandstärke der Rohre entspricht.

Mit dem in den Figuren 1 und 2 dargestellten Verbindungselement 4 soll das stabförmige Element 2 mit seinem rohrförmigen Ende mit der Achse 12 verbunden werden. Das rohrförmige Element 2 ist mit einer Öffnung 8 versehen, deren Durchmesser etwas größer ist als der Durchmesser des Nockens 13. Das Verbindungselement wird nun so weit geöffnet, daß die beiden Halbschalen 5 und 5' die Achse 12 ergreifen können. Dann wird das Verbindungselement geschlossen, wobei der Nocken 13 aus der Öffnung 21 herausragt. Anschließend wird der Schaft 3 des geschlossenen Verbindungselementes in das Element 2 eingeschoben. Zu diesem Zweck wird der Nocken 13 nach innen gepreßt, bis er die Öffnung 8 erreicht, wo er infolge der Federwirkung einrastet, wie Figur 2 zeigt. Zum Entfernen des Verbindungselementes aus dem Element 2 muß der Nocken 13 wiederum nach innen gepreßt werden, so daß die Sperre gelöst wird. Dies kann auf einfachste Weise von Hand oder auch mit Hilfe eines Schraubenziehers oder dergleichen geschehen.

Die Achse 12 bzw. die Halbschalen 5 könnten auch z. B. einen sechseckigen oder viereckigen Querschnitt aufweisen, so daß ein Drehen der Achse bei geschlossenem Verbindungselement nicht möglich wäre.

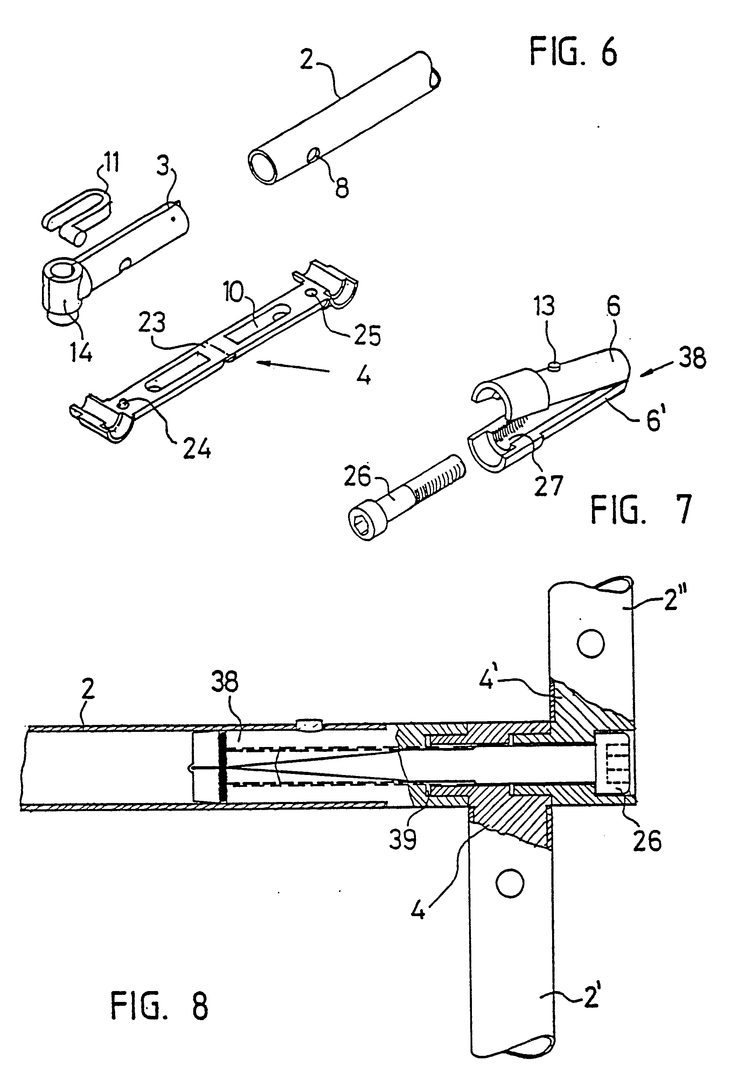

In Figur 6 ist ein alternatives Ausführungsbeispiel eines Verbindungselementes 4 dargestellt, welches zwar ebenfalls hälftig geteilt ist, bei dem die beiden Hälften jedoch an einem Scharnier 23 miteinander verbunden sind. Das Scharnier 23 kann beispielsweise durch einen dünnen Materialfilm gebildet sein. Die beiden Hälften werden durch einen Druckknopf 24 zusammengehalten, der in die benachbarte Druckknopföffnung 25 einpreßbar ist. Auch hier ist das Federelement 11 in die Ausnehmung 10 eingeschlossen und kann nur bei geöffnetem Verbindungselement entfernt werden.

In Figur 7 ist ein Verbindungselement dargestellt, das als Schraubenklammer 38 ausgebildet ist. Diese besteht ebenfalls aus den beiden Hälften 6 und 6', die an einem Ende scharnierartig miteinander verbunden sind. Bei diesem Schraubengreifer wird keine separate Sperrklinke eingelegt. Der Nocken 13 ist fest an der oberen Hälfte 6 angeordnet. Die Federspannung wird durch die beiden Hälften erzeugt, welche die Tendenz haben, sich zu öffnen. In den beiden Hälften 6 und 6' ist in Axialrichtung eine Gewindebohrung 27 angeordnet, in die im geschlossenen Zustand eine Schraube 26 eingeschraubt werden kann. Anstelle der Gewindegänge könnten auch nur einzelne Rippen oder Nocken vorgesehen sein, welche die Schraube oder einen ebenfalls gerippten Bolzen festhalten, der eingepreßt wird.

In Figur 8 ist ein Querschnitt durch eine typische Kombination von Verbindungselementen dargestellt. Eine derartige Kombination ergibt sich in der Regel am Ecken eines einzelnen Rahmens einer Gerippekonstruktion. In ein horizontal verlaufendes Rohrelement 2 ist eine Schraubenklammer 38 eingesetzt. Diese ist etwa wie in Figur 7 ausgebildet und hat als Greifvorrichtung lediglich eine axial verlaufende Bohrung 39. Im vertikal verlaufenden Rohr 2' ist ein Verbindungselement 4 eingeschoben, dessen Greifvorrichtung teilweise in die Bohrung 39 des Schraubengreifers 38 eindringt. Ein weiteres vertikales, jedoch nach oben gerichtetes Rohr 2" ist dadurch an die Verbindungsstelle angeschlossen, daß auch in dieses Rohr ein Verbindungselement 4' eingeschoben ist, das teilweise in die Bohrung des Verbindungselements 4 eindringt. Die gesamte Verbindung wird durch eine Imbußchraube 26 zusammengehalten, welche in die Gewindebohrung des Schraubengreifers 38 eingeschraubt ist. Ersichtlicherweise können auch bei angezogener Schraube 26 die Rohre 2' und 2" seitlich verschwenkt werden, so daß eine gelenkige Verbindung entsteht.

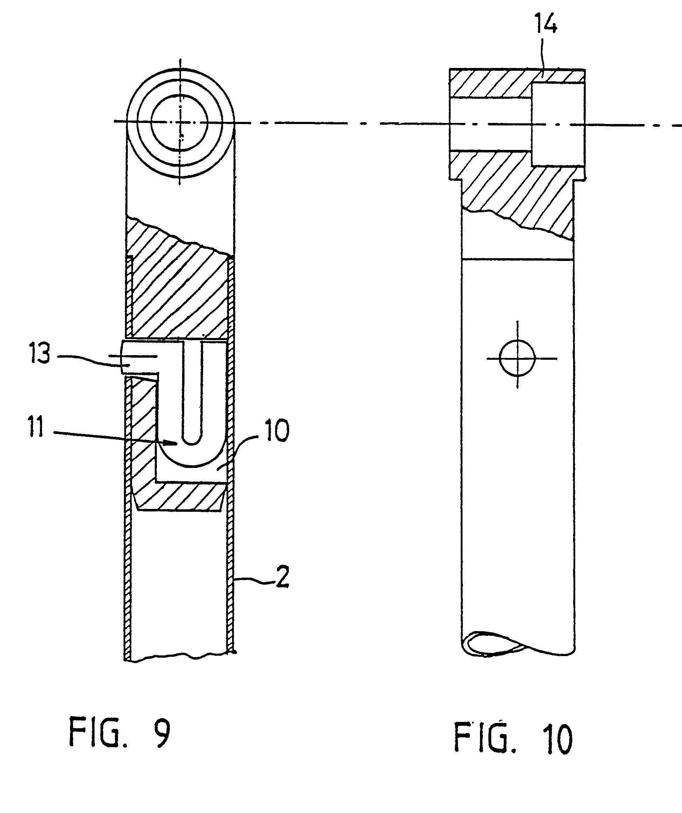

In den Figuren 9 und 10 ist ein alternatives Ausführungsbeispiel eines Verbindungselements dargestellt, welches nicht in zwei Hälften geteilt, sondern einstückig ausgebildet ist. Die Ausnehmung 10 ist auf einer Seite offen, so daß das eingelegte Federelement 11 mit dem Nocken 13 im eingeschobenen Zustand durch die Wandung des Rohrs 2 abgestützt wird. Die Greifvorrichtung 14 ist als einfache Durchgangsbohrung ausgebildet, welche quer zur Rohrachse verläuft. Vorzugsweise sind zwei Bohrungen von verschiedenem Durchmesser angeordnet, so daß beispielsweise ein Schraubenkopf versenkt werden kann, wie in Figur 8 dargestellt.

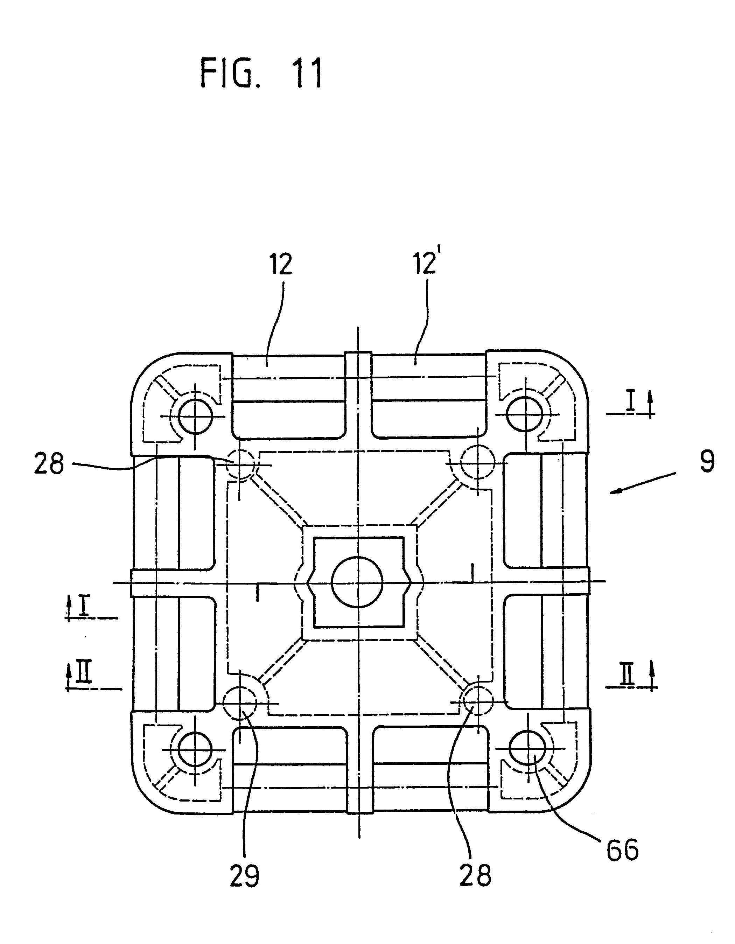

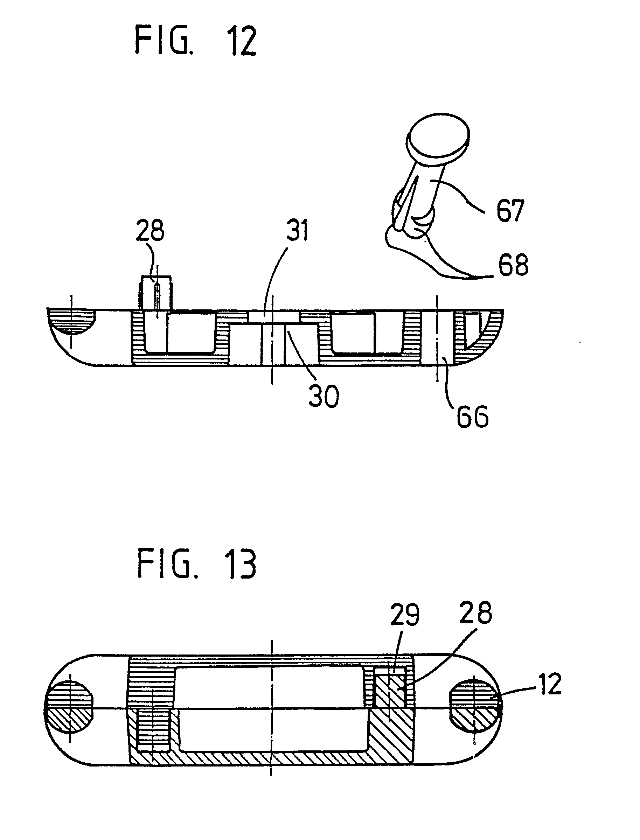

Die Figuren 11 bis 13 zeigen ein Kernteil 9, an das mehrere stabförmige Elemente angeschlossen werden können. Aus fabrikationstechnischen Gründen ist dieses Teil ebenfalls in zwei Hälften geteilt, die formgleich ausgebildet sind und ineinander gesteckt werden können, wie insbesondere Figur 13 zeigt. Zu diesem Zweck sind auf der Innenseite sich diametral gegenüberliegende Zapfen 28 und Bohrungen 29 vorgesehen. Am Umfangsbereich des Teils 9 sind auf jeder Seite je zwei Achsabschnitte 12 und 12' angeordnet, deren Breite jeweils der Breite einer Greifvorrichtung entspricht. Im Zentrum ist eine Vertiefung 30 vorgesehen, die beispielsweise einen hexagonalen Körper drehfest aufnehmen kann. Das Durchgangsloch 31 und die Bohrungen 66 dienen zur Aufnahme einer Schraube zum Verbinden des Kernteils mit anderen Bauteilen.

Anstelle von Schrauben könnte auch ein Druckknopf 67 verwendet werden, dessen zwei federnde Nasen 68 zusammenpreßbar sind. Der gleiche Druckknopf könnte auch durch die geschlossenen Halbschalen eines Verbindungselements gesteckt werden.

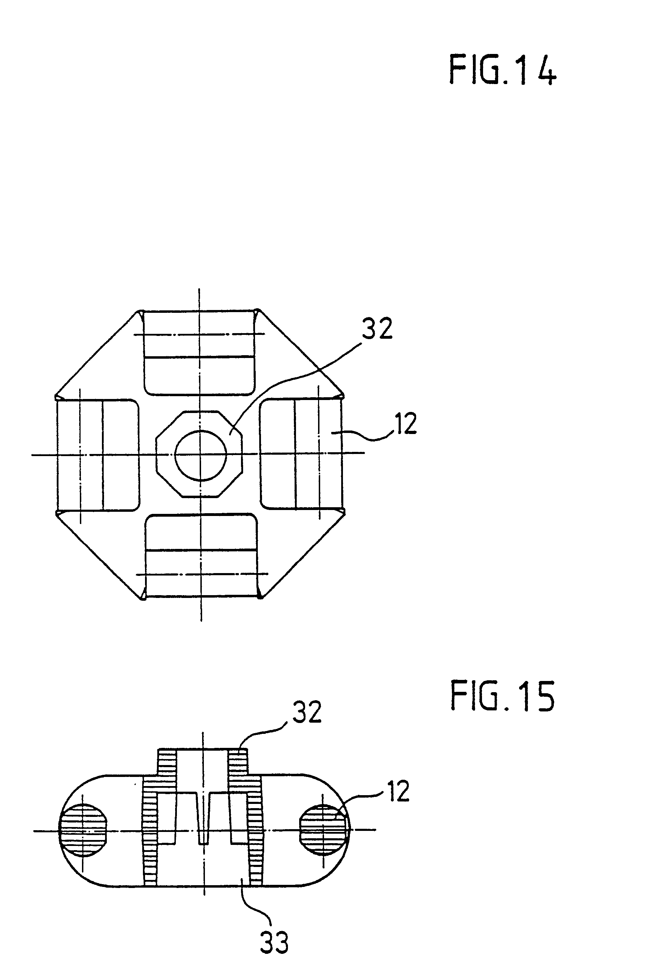

In den Figuren 14 und 15 ist ein anderer Typ eines Kernteils dargestellt, welches etwas kleiner ist und an jeder Seite nur einen einzigen Achsabschnitt 12 aufweist. Auf einer Seite ist ein Sechskantflansch 32 angeordnet, der formschlüssig in die Vertiefung 30 des Kernteils gemäß Figur 11 paßt. Die Vertiefung 33 dient zur Aufnahme eines Schraubenkopfes. Selbstverständlich können die Kernteile auch andere Konfigurationen aufweisen und beispielsweise sechseckig, dreieckig oder auch als Polyeder ausgebildet sein.

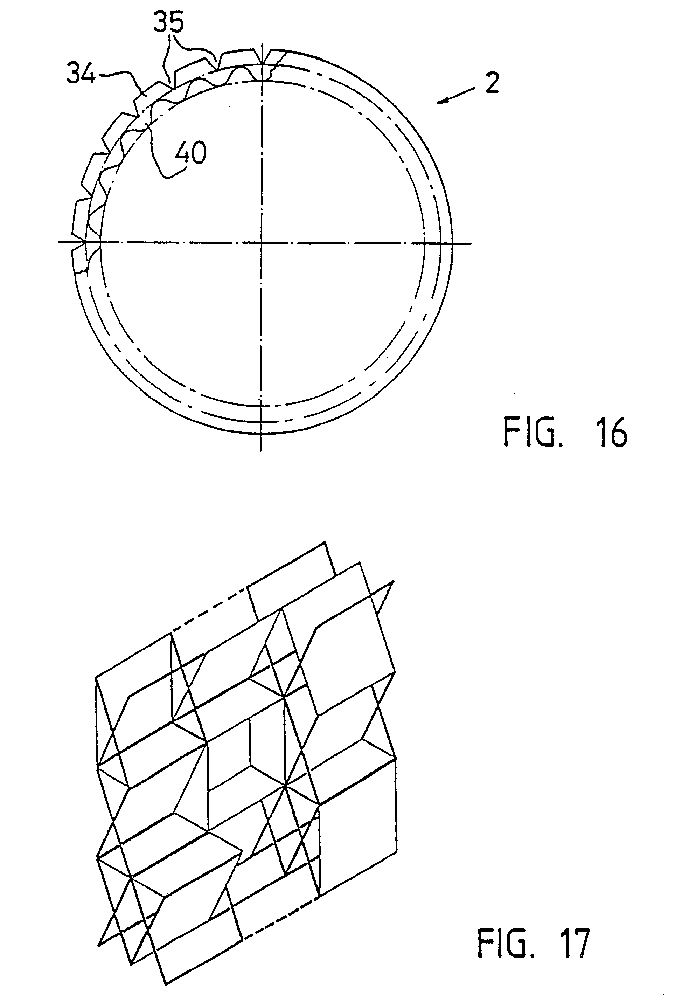

Figur 16 zeigt eine bevorzugte Querschnittskonfiguration eines stabförmigen Elements 2. Der Rohrmantel 34 ist in Längsrichtung mit einzelnen Rillen 35 versehen. Der Rohrmantel ist dabei vorzugsweise über dem ganzen Umfang mit einzelnen Wellen 40 versehen, womit eine gewisse Elastizität in Radialrichtung erzielt wird. Gleichzeitig wird aber auch die Verwindungssteifigkeit und die Knickfestigkeit in Axialrichtung erhöht.

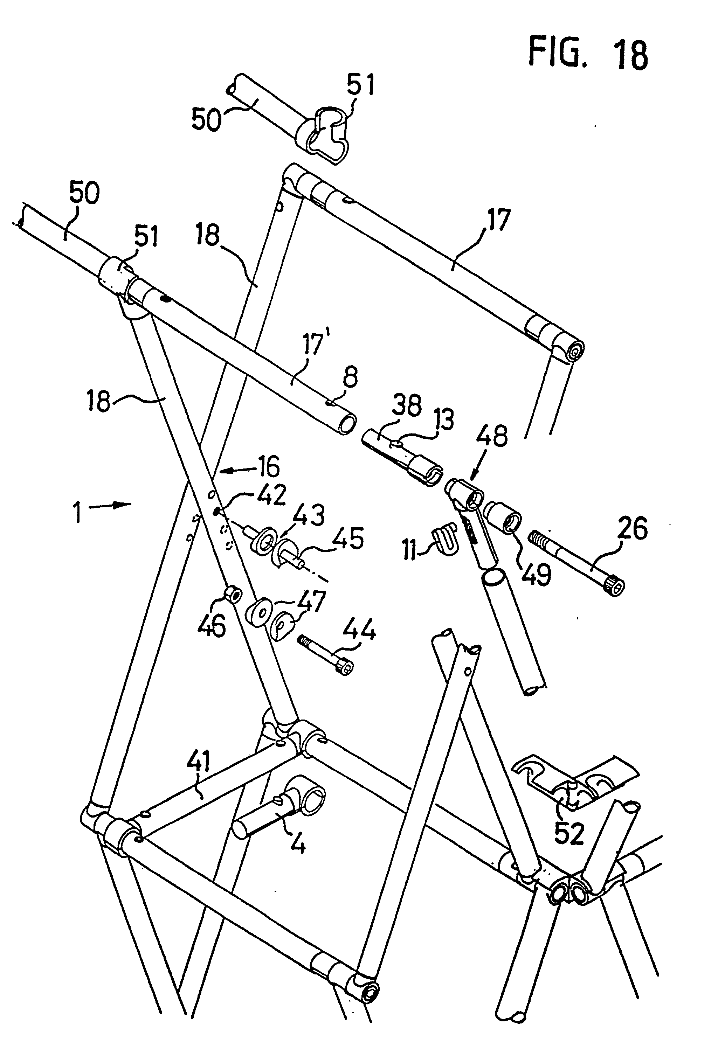

Figur 17 zeigt schematisch ein aus mehreren sich kreuzenden Stabpaaren aufgebautes Gerippe, welches zusammenklappbar ist. Dieses Gerippe besteht aus einzelnen Rahmeneinheiten, wie anhand von Figur 18 erläutert wird.

Ein Gerippe 1 kann dabei im wesentlichen aus zwei sich kreuzenden, planen und rechteckigen Rahmen 17 bestehen, wobei die Rahmenseiten 18 die sich an den Kreuzungsstellen 16 kreuzenden stabförmigen Elemente 2 bilden. Die Enden der Elemente sind mit den bereits beschriebenen Verbindungselementen miteinander verbunden. Das Gerippe kann beispielsweise durch ein Stabilisierungsstück 41 in einer bestimmten Position fixiert werden. Die stabförmigen Elemente werden nachstehend der Einfachheit halber nur noch als Rohre bezeichnet. An der Kreuzungsstelle 16 ist eine durch das ganze Rohr gehende Bohrung 42 angeordnet. Wie in der Zeichnung angedeutet, sind im Mittelbereich des Rohres vorzugsweise mehrere Bohrungen vorgesehen, so daß sich die beiden Rohre auch außerhalb ihrer Mitte kreuzen können. In die Bohrung 42 kann entweder ein Schnappgelenk 43 oder eine Verbindungsschraube 44 eingesetzt werden. Das Schnappgelenk besteht aus zwei Teilen, welche druckknopfartig zusammengepreßt werden können. Beide Teile sind mit einem Bolzen 45 versehen, der in die Bohrungen 42 der beiden Rohre eingesteckt werden kann. Da die Rohre des Rahmens 17' auf der Innenseite des Rahmens 17 angeordnet sind, bleiben die beiden Teile des Schnappverschlusses 43 zusammengepreßt und die Bolzen 45 können nicht herausrutschen.

Wenn die Kreuzungsstellen 16 einer größeren mechanischen Belastung ausgesetzt sind, wird vorzugsweise eine Verbindungsschraube 44 eingesetzt, wobei die Verbindung mit einer Sperrmutter 46 gesichert wird. Zwischen den beiden sich kreuzenden Rohren sind Lagerscheiben 47 angeordnet, deren eine Seite dem Außenmantel des Rohres angepaßt ist, um eine größtmögliche Stabilität zu gewährleisten.

Die Eckverbindung 48 entspricht beispielsweise etwa der in Figur 8 dargestellten Verbindung, wobei je nach Bedarf auch noch Distanzhülsen 49 hinzugefügt werden können. Diese Distanzhülsen sind insbesondere erforderlich, um in der Ebene zweier sich kreuzender Rohre die Dicke eines Rohres zu kompensieren.

Zum Verbinden einzelner Gerippeteile mit einem anderen Gerippe können einzelne Verbindungsstäbe 50 vorgesehen sein, deren Enden mit einer einrastbaren Rohrkupplung 51 versehen sind. Diese Rohrkupplungen können wie dargestellt auf die Ecke eines Rahmens aufgeschnappt werden.

Eine weitere Anschlußmöglichkeit an ein Rahmengrundelement ergibt sich mit einem Eckstück 52. Dieses Eckstück kann entweder fest oder als Scharnier ausgebildet sein.

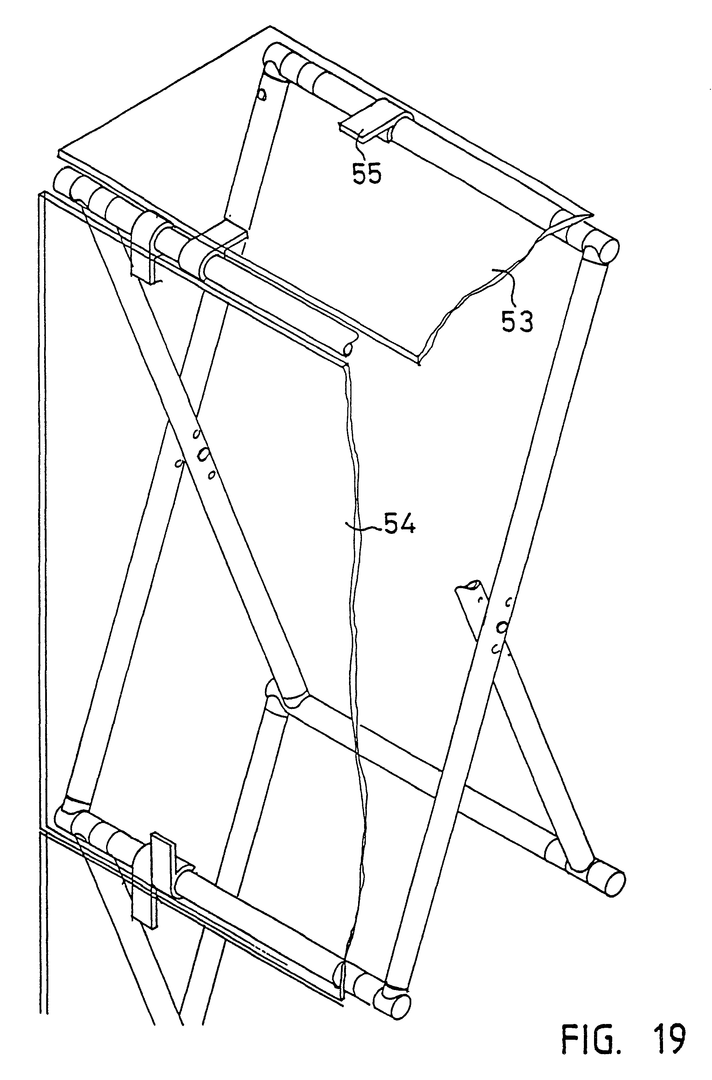

Figur 19 zeigt eine etwa gemäß Figur 18 aufgebaute Gerippekonstruktion, bei der die Rahmen mit Tablaren 53 und mit Schautafeln 54 versehen sind. Zur Fixierung dienen dabei Klammern 55, welche auf die Rohre aufgeschnappt werden können.

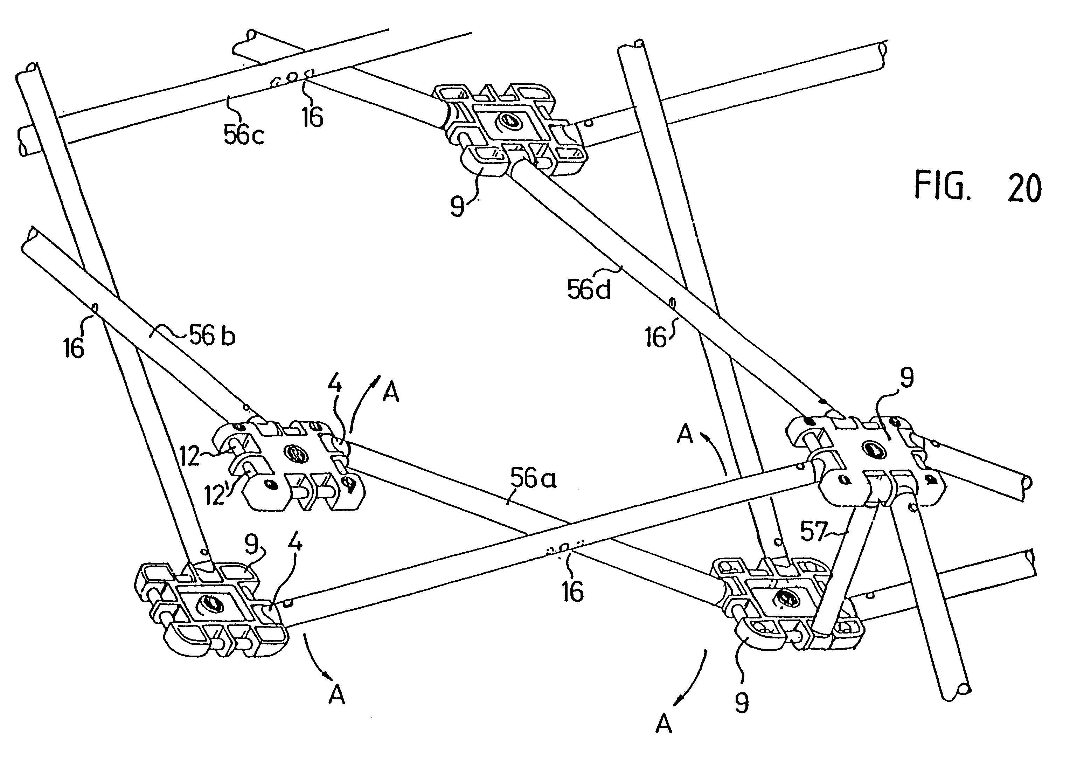

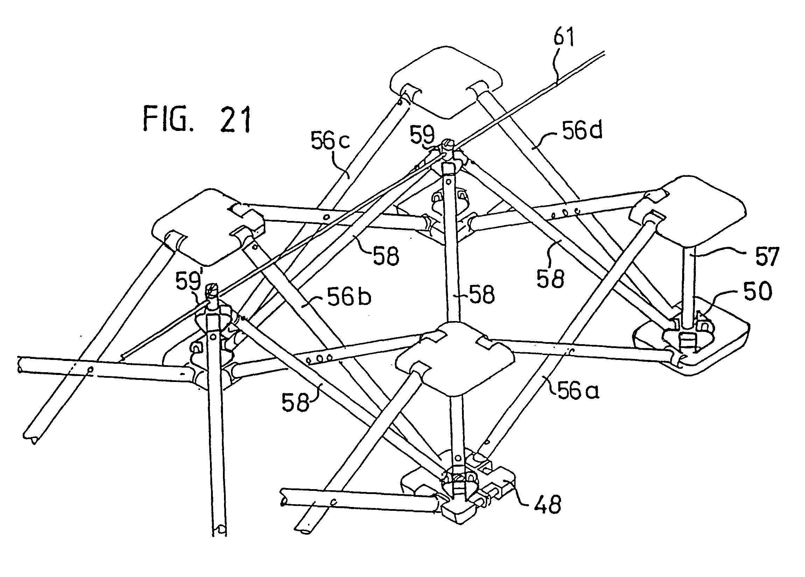

In den Figuren 20 und 21 sind Gerippestrukturen beschrieben, bei denen die Grundform nicht aus sich kreuzenden ebenen Rahmenpaaren besteht. Vielmehr sind einzelne Stabpaare oder Scheren 56 zu geschlossenen Einheiten mit polygonem Raster miteinander verbunden. In Figur 20 ist eine derartige geschlossene Einheit, bestehend aus den vier Scheren 56a, 56b, 56c und 56d dargestellt. Die Enden der Scheren 56 sind mittels der großen Kernteile 9 gelenkig miteinander verbunden. Hier wird der Zweck der beiden nebeneinander liegenden Achsabschnitte 12 und 12' besonders deutlich. Da die einzelnen Rohre der Scheren 56 jeweils um eine Rohrstärke versetzt zueinander sind, ist wechselweise ein Anschluß an einem Achsabschnitt 12 oder 12' erforderlich. Jede geschlossene Einheit kann zu einem Gebilde zusammengefaltet werden, bei dem alle Stäbe der einzelnen Scheren 56 beinahe parallel zueinander verlaufen und nahe beieinander liegen. Jede einzelne Schere führt dabei um die Kreuzungsstelle 16 eine Schwenkbewegung aus, wie sie mit Pfeilrichtung A angedeutet ist.

Zur Stabilisierung einer geschlossenen Einheit werden zwei Kernteile 9 mit einem Distanzrohr 57 verbunden. Dieses kann, wie in Figur 20 an den Achsen 12 oder, wie in Figur 21 dargestellt, im Zentrum der Kernteile 9 angeschlossen werden. Das Distanzrohr kann auf beiden Seiten mit dem bereits erwähnten Druckknopf versehen sein.

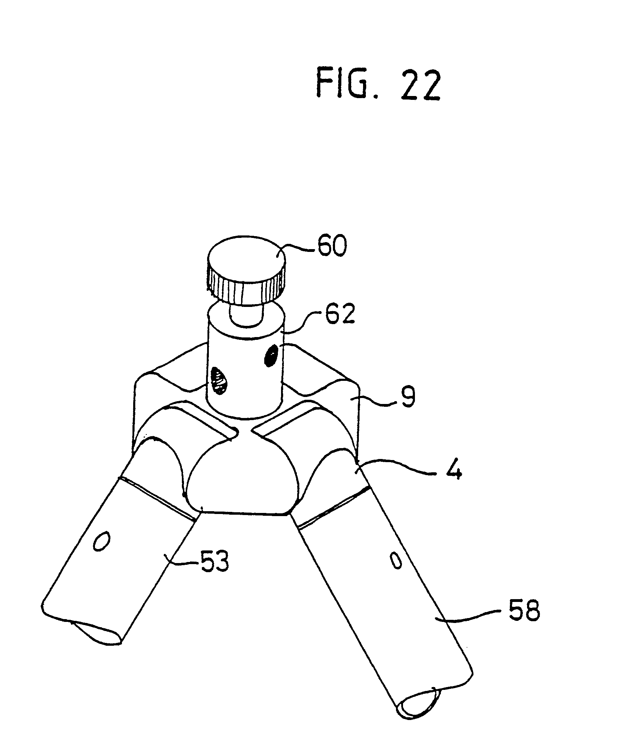

In Figur 21 ist wiederum eine geschlossene Einheit aus vier miteinander verbundenen Scheren 56a, 56b 56c, und 56d dargestellt, wie bereits in Figur 20 gezeigt wurde. Die geschlossene Einheit ist jedoch mit einer pyramidenartigen Stabstruktur verstärkt, wobei jeder Stab 58 dieser Stabstruktur an einer Verbindungsstelle zweier Scheren angeschlossen ist. Die Pyramidenstäbe 58 treffen sich an der Pyramidenspitze 59 und sind dort zu einem Knoten verbunden, wie dies beispielsweise in Figur 22 dargestellt ist. In Figur 21 ist auf der linken Seite eine weitere geschlossene Einheit mit einer Pyramidenspitze 59' teil-weise dargestellt. Die pyramidenartigen Stab-strukturen dienen dazu, die geschlossenen Einheiten in der horizontalen Ebene zu verstärken, so daß beispielsweise Deckenkonstruktionen gebaut werden können. Vorzugsweise werden die benachbarten Pyramidenspitzen 59, 59' usw. über einen Seilzug 61 miteinander verbunden. Anstelle des Seilzugs kann selbstverständlich auch ein weiterer Stab oder eine Fläche verwendet werden. Der Seilzug hat jedoch den Vorteil, daß das gesamte Geripppe zusammengefaltet werden kann, wobei der Seilzug im zusammen-gefalteten Zustand lose herunterhängt. Ersichtli-cherweise muß die Länge der Pyramidenstäbe 58 derart gewählt werden, daß sie das Zusammenfalten der Scheren 56 nicht behindern. Die Pyramidenspitzen können an einer Deckenkonstruktion sowohl nach oben als auch nach unten oder nach beiden Richtungen gerichtet sein. Mit dem Seilzug 61 kann der Durchhang einer Dek-kenkonstruktion korrigiert werden. Die Pyrami-denspitzen schaffen zudem eine weitere Anschlußebene, auf der mittels Kernteilen weitere Strukturen aufgebaut werden können.

Figur 22 zeigt eine Pyramidenspitze, wobei das Kernteil 9 mit einer Seilzughalterung 62 versehen ist. In diese kann ein Seilzug durchgeführt und mit einer Feststellschraube 60 festgeklemmt werden.

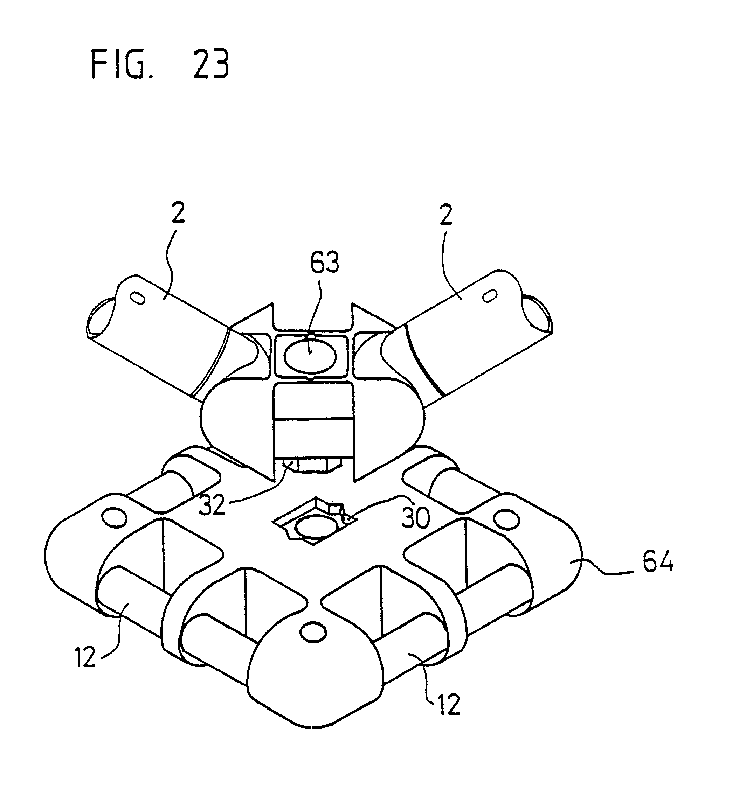

Figur 23 zeigt die Kombination zweier Kernteile gemäß den Figuren 11 und 14. Das kleine Kernteil 63 wird dabei in das große Kernteil 64 eingesteckt, wobei der Sechskantflansch 32 in die Vertiefung 30 eindringt. Mit einer nicht dargestellten Befestigungsschraube werden die beiden Teile 63 und 64 kraftschlüssig miteinander verbunden.

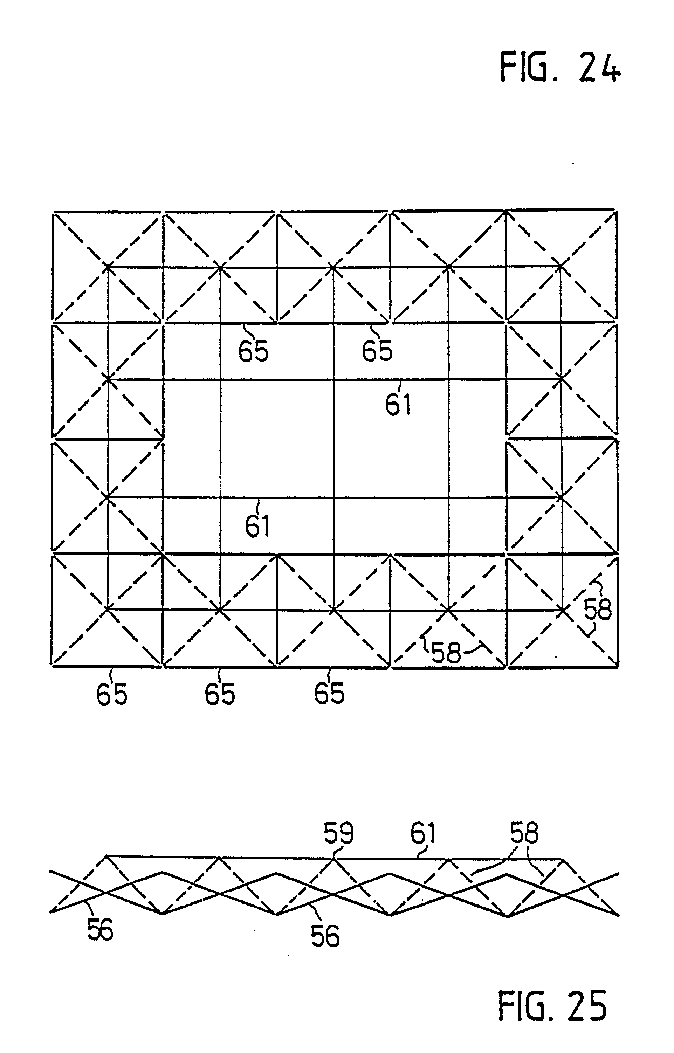

Die Figuren 24 und 25 zeigen eine Konstruktion mit horizontaler Ausdehnung bestehend aus mehreren aneinander gereihten geschlossenen Einheiten 65. Die Pyramidenstäbe 58 sind als unterbrochene Linien dargestellt. Die Seilzüge 61 verbinden die benachbarten Pyramidenspitzen geradlinig miteinander.

Die hier dargestellten und beschriebenen Ge-rippekonstruktionen stellen lediglich Einzelbei-spiele dar. Ersichtlicherweise kann eine beinahe unbeschränkte Zahl von verschiedenen Raumfor-men mit unterschiedlichem Grundraster aufge-baut werden. So können insbesondere auch kuppelartige Gebilde errichtet werden, die z. B. mit einer geeigneten Bespannung als Notunterkünfte dienen können.

**Patentansprüche**

1. Geripppe bestehend aus stabförmigen Elemen-ten (2), welche zu einem raumförmigen Gebilde zusammenbaubar sind, wobei die Enden der stabförmigen Elemente rohrförmig ausgebildet sind und wenigstens eine Öffnung (8) im Rohrmantel aufweisen und mit Verbindungselementen (4) versehen sind, die einen in die Enden einschiebbaren Schaft (3) aufweisen, wobei am Schaft der Verbindungselemente ein in die Öffnung einrastbarer Nocken (13) angeordnet ist, und wobei die Verbindungselemente (4) ein aus dem Rohrende ragendes Anschlußstück mit einer Greifvorrichtung aufweisen, dadurch gekennzeichnet, daß die Verbindungselemente (4) in der Ebene der Rohrachse zwei separate, scharnierartig miteinander verbundene, bzw. verbindbare Teile bildend, geteilt ausgebildet sind, daß der Schaft (3) eine Ausnehmung (10) aufweist, in der ein den Nocken (13) tragendes Federelement (11) gelagert ist, und daß die Greifvorrichtung (14) aus zwei bei eingeschobenem Schaft (3) geschlossenen Halbschalen (5, 5') besteht.

2. Geripppe nach Anspruch 1, dadurch gekennzeichnet, daß das Federelement (11) als U-förmiger Bügel aus federelastischem Material ausgebildet ist, dessen einer Schenkel den Nocken (13) trägt und dessen anderer Schenkel am Boden der Ausnehmung (10) aufliegt.

3. Geripppe nach einem der Ansprüche 1 oder 2, dadurch gekennzeichnet, daß die beiden Hälften der Verbindungselemente an einem Ende mittels einer Einrastvorrichtung (7) zusammensteckbar sind.

4. Geripppe nach einem der Ansprüche 1 bis 3, dadurch gekennzeichnet, daß die Ausnehmung (10) im Schaft als Hohlraum in beiden Hälften (6, 6') der Verbindungselemente (4) ausgebildet ist, der das Federelement (11) umschließt.

5. Geripppe nach einem der Ansprüche 1 bis 4, dadurch gekennzeichnet, daß die Greifvorrichtung (14) an ein Kernteil (9) anschließbar ist, das an seiner Aussenseite mit Kupplungsmitteln versehen ist, welche formschlüssig in die Halbschalen (5, 5') passen.

6. Geripppe nach Anspruch 5, dadurch gekennzeichnet, daß das Kernteil (9) etwa viereckig ausgebildet ist und auf jeder Seite je zwei Achsabschnitte aufweist, von denen jeder eine Greifvorrichtung (14) aufnehmen kann.

7. Gerippe nach einem der Ansprüche 1 bis 6, dadurch gekennzeichnet, daß sich die stabförmigen Elemente (2) wenigstens teilweise scherenartig kreuzen und daß die gelenkige Verbindung an den Kreuzungsstellen (16) lösbar ist.

8. Gerippe nach Anspruch 7, dadurch gekennzeichnet, daß es ein Grundelement aus zwei sich kreuzenden, planen und rechteckigen Rahmen (17, 17') aufweist, wobei jeweils parallele Rahmenseiten die sich scherenartig kreuzenden Elemente bilden.

9. Gerippe nach Anspruch 8, dadurch gekennzeichnet, daß wenigstens drei sich scherenartig kreuzende Stabpaare an ihren Stabenden zu einer geschlossenen Einheit gelenkig miteinander verbunden sind.

10. Gerippe nach Anspruch 9, dadurch gekennzeichnet, daß jede geschlossene Einheit der miteinander verbundenen Stabpaare mit einer pyramidenartigen Stabstruktur (58) verstärkt ist, wobei wenigstens zwei Stäbe der Stabstruktur an je einer Verbindungsstelle zweier Stabpaare angeschlossen ist.

11. Gerippe nach Anspruch 10, dadurch gekennzeichnet, daß mehrere geschlossene Einheiten miteinander verbundener Stabpaare in einer Ebene aneinander gereiht sind, und daß wenigstens ein Teil der Spitzen (59) der ihnen zugeordneten pyramidenartigen Stabstrukturen (58) über einen Seilzug (61) oder über einen weiteren Stab oder über eine Platte miteinander verbunden sind.

12. Gerippe nach einem der Ansprüche 1 bis 11, dadurch gekennzeichnet, daß die stabförmigen Elemente (2) Rohre sind, deren Mantel mit in Achsrichtung verlaufenden Rillen (35) ausgebildet ist.

13. Gerippe nach Anspruch 12, dadurch gekennzeichnet, daß der Rohrmantel im Querschnitt wellenförmig (40) ausgebildet ist.

## Claims

1. A framework consisting of rod-like elements (2), which can be assembled to form a room-like shape, the ends of the rod-like elements being tubular and having at least one aperture (8) in the tube casing and being provided with connecting elements (4), which have a shaft (3) insertable in the ends, a cam (13) being mounted on the shaft of the connecting elements and being engageable in the aperture, and the connecting elements (4) having a joining piece with a gripping device, which joining piece projects out of the tube end, characterised in that the connecting elements (4) are so formed as to be divided into two separate parts in the plane of the tube axis, these parts being connected or connectable together in the manner of a hinge, in that the shaft (3) has a recess (10) in which a sprung element (11) carrying the cam (13) is mounted, and in that the gripping device (14) consists of two half shells (5, 5') which are closed when the shaft (3) is in the inserted position.

2. A framework according to claim 1, characterised in that the sprung element (11) is formed as a U-shaped bow made of springy material, whose one flange carries the cam (13) and whose other flange lies on the bottom of the recess (10).

3. A framework according to one of claims 1 or 2, characterised in that the two halves of the connecting elements may be fixed together at one end by means of a locking device (7).

4. A framework according to one of claims 1 to 3, characterised in that the recess (10) is formed in the shaft as a hollow space, which surrounds the sprung element (11), in both halves (6, 6') of the connecting elements (4).

5. A framework according to one of claims 1 to 4, characterised in that the gripping device (14) may be joined to a core member (9), which is provided on its exterior with coupling means, which fit with positive locking in the half shells (5, 5').

6. A framework according to claim 5, characterised in that the core member (9) is approximately square, and has two axial cut-outs on each side, each of which can receive a gripping device (14).

7. A framework according to one of claims 1 to 6, characterised in that the rod-like elements (2) cross over at least in part in the manner of scissors and in that the hinged joint is detachable at the cross-over points (16).

8. A framework according to claim 7, characterised in that it has a base element consisting of two crossing, plane and rectangular frames (17, 17'), and each parallel frame side forms the elements crossing over in the manner of scissors.

9. A framework according to claim 8, characterised in that at least three rod pairs crossed in the manner of scissors are pivotably connected together at their rod ends to form a closed unit.

10. A framework according to claim 9, characterised in that each closed unit of the joined pairs of rods is reinforced with a pyramid-shaped rod structure (58), at least two rods of the rod structure being connected to a respective joining point of two rod pairs.

11. A framework according to claim 10, characterised in that a plurality of closed units of joined rod pairs are arranged in a row one against the other in one plane, and that at least some of the apices (59) of the associated pyramid-shaped rod structures (58) are joined together via a control cable (61) or via a further rod or a plate.

12. A framework according to one of claims 1 to 11, characterised in that the rod-like elements (2) are tubes, whose casing is formed with grooves (35) in the axial direction.

13. A framework according to claim 12, characterised in that the tube casing has a shaft-like (40) cross-section.

Revendications

1. Ossature constituée d'éléments en forme de barre (2) pouvant être assemblés pour constituer une structure spatiale, dans laquelle les extrémités des éléments en forme de barre sont de forme tubulaire et présentent au moins une ouverture (8) dans la paroi latérale du tube et sont munis d'éléments de liaison (4) présentant un fût (3) pouvant être enfilé dans les extrémités, dans laquelle un ergot (13) pouvant être encliqueté dans l'ouverture est disposé sur le fût des éléments de liaison et dans laquelle les éléments de liaison (4) présentent une pièce de raccordement faisant saillie hors de l'extrémité du tube et comportant un dispositif de préhension, caractérisée en ce que les éléments de liaison (4) sont conçus séparés dans le plan de l'axe du tube pour former deux parties distinctes reliées ou pouvant être reliées l'une de l'autre à la façon d'une charnière, en ce que le fût (3) présente un évidement (10) dans lequel est placé un élément formant ressort (11) portant l'ergot (13), et en ce que le dispositif de préhension (14) est constitué de deux demi-coques (5, 5') fermées lorsque le fût (3) est enfilé.

2. Ossature selon la revendication 1, caractérisée en ce que l'élément formant ressort (11) est réalisé sous la forme d'un étrier en U en matériau élastique, dont une aile porte l'ergot (13) et dont l'autre aile repose sur le fond de l'évidement (10).

3. Ossature selon l'une des revendications 1 ou 2, caractérisée en ce que les deux moitiés des éléments de liaison peuvent être emboîtées ensemble à une extrémité au moyen de dispositifs d'encliquetage (7).

4. Ossature selon l'une des revendications 1 à 3, caractérisée en ce que l'évidement (10) prévu dans le fût est réalisé sous la forme d'un espace creux, ménagé dans les deux moitiés (6, 6') des éléments de liaison (4) et renfermant l'élément formant ressort (11).

5. Ossature selon l'une des revendications 1 à 4, caractérisée en ce que le dispositif de préhension (14) peut être raccordé à un noyau (9) pourvu sur son côté extérieur de moyens d'accouplement s'ajustant par complémentarité de forme dans les demi-coques (5, 5').

6. Ossature selon la revendication 5, caractérisée en ce que le noyau (9) a une forme à peu près carrée et présente de chaque côté, deux segments d'axe dont chacun peut recevoir un dispositif de préhension (14).

7. Ossature selon l'une des revendications 1 à 6, caractérisée en ce que les éléments en forme de barre (2) se croisent au moins partiellement à la façon de ciseaux et en ce que la liaison articulée est détachable au niveau des emplacements de croisement (16).

8. Ossature selon la revendication 7, caractérisée en ce qu'elle présente un élément de base constitué de deux cadres (17, 17') plans et rectangulaires qui se croisent, les côtés parallèles de chaque cadre formant les éléments qui se croisent à la façon de ciseaux.

9. Ossature selon la revendication 8, caractérisée en ce qu'au moins trois paires de barres se croisant à la façon de ciseaux sont reliées les unes aux autres de manière articulée, à leurs extrémités pour former un ensemble fermé.

10. Ossature selon la revendication 9, caractérisée en ce que chaque ensemble fermé des paires de barres reliées les unes aux autres est renforcé par une structure de barres (58) en forme de pyramide, au moins deux barres de la structure de barres étant raccordées à chaque emplacement de liaison de deux paires de barres.

11. Ossature selon la revendication 10, caractérisée en ce que plusieurs ensembles fermés de paires de barres reliées les unes aux autres sont disposés en rangée l'un à côté de l'autre dans un plan et en ce qu'au moins une partie des pointes (59) des structures de barres (58) en forme de pyramide qui leur correspond sont reliées les unes avec les autres par l'intermédiaire d'un câble de traction (61) ou par l'intermédiaire d'une autre barre ou par l'intermédiaire d'une plaque.

12. Ossature selon l'une des revendications 1 à 11, caractérisée en ce que les éléments (2) en forme de barre sont des tubes dont la paroi latérale est pourvue de rainures (35) s'étendant dans la direction axiale.

13. Ossature selon la revendication 12, caractérisée en ce que la paroi latérale tubulaire présente en coupe une forme ondulée (40).

FIG. 1

FIG. 2

FIG. 3

FIG. 4

FIG. 5

FIG. 6

FIG. 7

FIG. 8

FIG. 9

FIG. 10

# FIG. 11

# FIG. 12

28    31    67

68

30    66

# FIG. 13

29    28

12

FIG.14

32

12

FIG.15

32

12

33

FIG. 16

FIG. 17

FIG. 18

FIG. 19

FIG. 20

FIG. 21

# FIG. 22

# FIG. 23

FIG. 24

65    65

61

61

58

58

65    65    65

FIG. 25

59    61    58

56    56